# EUROPÄISCHE PATENTSCHRIFT

(11) **EP 2 684 849 B1**
(45) Veröffentlichungstag und Bekanntmachung des Hinweises auf die Patenterteilung: **30.10.2019**
(21) Anmeldenummer: 13175555.5
(22) Anmeldetag: 08.07.2013
(51) Int. Cl.: C02F 1/42

(54) **Verfahren und Vorrichtung zur Aufbereitung von Trinkwasser**
Method and device for treating drinking water
Procédé et dispositif destinés à la préparation d'eau potable

(30) Priorität: 09.07.2012 DE 102012211903
(43) Veröffentlichungstag der Anmeldung: 15.01.2014
(73) Patentinhaber: BWT Aktiengesellschaft, 5310 Mondsee (AT)
(72) Erfinder: Johann, Jürgen, Dr., 69226 Nußloch (DE); Bissen, Monique, Dr., 5310 Mondsee (AT)
(74) Vertreter: Pfiz, Thomas

(56) Entgegenhaltungen:
- GB-A- 299 074
- JP-A- 2002 250 794

## Beschreibung

Die Erfindung betrifft ein Verfahren und eine Vorrichtung zur Aufbereitung von Trinkwasser insbesondere für wasserführende Installationen oder Geräte, wobei aufzubereitendes Wasser mittels eines Ionenaustauschers durch Austausch von Erdalkali-Ionen gegen Wasserstoff-Ionen zumindest teilweise enthärtet wird. Der Ionenaustauscher kann sich dabei auch nur zu einem Teil (z.B. 10-90%) in Wasserstoffform und im Übrigen beispielsweise in Alkaliform befinden.

Wasserenthärtung mit Harzen und Korrosionsschutz durch Phosphate sind Techniken aus z.B. JP 2002 250794 und GB 299 074 bekannt. Zum Schutz von wasserführenden Installationen oder Geräten wie Kaffeemaschinen, Getränkeautomaten, Koch-, Back- und Gargeräten wird häufig das verwendete Trinkwasser mittels eines Wasserfilters aufbereitet. Ein solches Filter soll die Geräte in erster Linie vor Verkalkung schützen und gegebenenfalls im Trinkwasser befindliche unerwünschte Substanzen zu entfernen. Unerwünschte Verunreinigungen sind beispielsweise organische Substanzen wie Humin- und Fulvinsäuren, Reste von Pestiziden, Chlor und Chorverbindungen, und Schwermetalle, welche meist aus Rohrleitungen und Armaturen herausgelöst werden.

Die Entfernung von Schwermetallen wird in der Regel mittels eines Ionenaustauschers durchgeführt. Weiterhin hat der Ionenaustauscher die Aufgabe, die Geräte vor Verkalkung zu schützen und insbesondere bei Kaffeemaschinen und Getränkeautomaten auch zur Erzielung eines besseren Geschmacks eine Reduktion der Karbonathärte zu erreichen. Beispielsweise ist es für die Zubereitung von Kaffee vorteilhaft, wenn die Karbonathärte bei ca. 6 - 8 °d liegt. Zur Reduktion der Karbonathärte kann ein Ionenaustauscher eingesetzt werden, welcher sich im Ausgangszustand überwiegend in der Wasserstoffform befindet. Solche Ionenaustauscher sind Kationenaustauscher, welche entweder Sulfonsäuregruppen oder aber Carboxylgruppen enthalten. Erstere werden als stark saure Kationenaustauscher und letztere als schwach saure Kationenaustauscher bezeichnet. Handelsübliche stark saure Kationenaustauscher sind zum Beispiel DOWEX HCR-S, AMBERLITE™ PWC14 und schwach saure Kationenaustauscher sind zum Beispiel Lewatit s 8227.

Ein Ionenaustauscher in der Wasserstoffform tauscht nach folgendem Schema die Kationen des Trinkwassers gegen Wasserstoffionen des Ionenaustauschers aus:

Ca²⁺ (Trinkwasser) + 2 H⁺ (Ionenaustauscher) → Ca²⁺ (Ionenaustauscher) + 2 H⁺ (Trinkwasser) (1)

Die Wasserstoffionen aus dem Ionenaustauscher reagieren mit den Hydrogencarbonationen des Trinkwassers nach folgendem Schema:

2 H⁺ + 2 HCO₃⁻ → H₂CO₃ (2)

Es entsteht somit Kohlensäure. Durch die Entfernung der Härtebildner, als auch die Bildung der Kohlensäure, kann die Salzfracht im Wasser deutlich verringert werden. Aufgrund der gebildeten Kohlensäure wird das aufbereitete Trinkwasser allerdings sauer, d.h. der pH-Wert liegt in einem Bereich von 4,3 bis 6,8 deutlich unter dem pH-Wert des Rohwassers. Zwar verhindert die pH-Verschiebung effektiv die Ausfällung von Calciumcarbonat, jedoch ist das Wasser nach der Aufbereitung kalkaggressiv und kann dadurch Korrosion in den nachfolgenden Geräten auslösen.

Ausgehend hiervon liegt der Erfindung die Aufgabe zugrunde, die im Stand der Technik bekannten Aufbereitungsverfahren und Wasserfilter weiter zu verbessern und ein mittels eines Ionenaustauschers sauer eingestelltes Wasser möglichst unter Aufrechterhaltung des Kalkschutzes infolge der pH-Verschiebung weiter zu optimieren, so dass schädliche Auswirkungen auf Installationen und Geräte möglichst vermieden werden.

Zur Lösung dieser Aufgabe wird die im Patentanspruch 1 bzw. 9 angegebene Merkmalskombination vorgeschlagen. Vorteilhafte Ausgestaltungen und Weiterbildungen der Erfindung ergeben sich aus den abhängigen Ansprüchen. Die Erfindung geht von dem Gedanken aus, einen Korrosionshemmstoff in Kombination mit dem Ionenaustauscher so einzusetzen, dass die in das Wasser abgegebenen Wasserstoffionen abgepuffert bzw. neutralisiert werden, so dass eine Qualitätsbeeinträchtigung des Trinkwassers weitgehend vermieden und ein effektiver Korrosionsschutz erzielt wird.

Demzufolge wird in verfahrensmäßiger Hinsicht vorgeschlagen, dass das aufzubereitende Wasser mit einem durch Tricalciumdiphosphat und/oder Trimagnesiumdiphosphat gebildeten Korrosionsinhibitor behandelt wird, wobei dem Wasser Orthophosphat-Ionen zugesetzt werden.

Tertiäre Erdalkali-Orthophosphate sind zwar für sich in neutralem Wasser nur schwer löslich, können aber in Verbindung mit Wasserstoffionen für eine vorteilhafte Eindosierung von Orthophosphat-Ionen sorgen. Hierbei bildet sich je nach pH-Wert des Wassers mit den aus dem Ionenaustauscher eingebrachten Wasserstoffionen eine Lösung aus Hydrogenphosphat und Dihydrogenphosphat; so liegt zum Beispiel bei einem pH-Wert von 6,6 ca. ca. 40% als Hydrogenphosphat und 60% als Dihydrogenphosphat vor. Die aggressiven Wasserstoffionen werden dabei nach folgender Reaktion abgepuffert bzw. neutralisiert:

(PO₄³⁻) + H⁺ ↔ (HPO₄²⁻) pKa = 12.1 (3)

(HPO₄²⁻) + H⁺ ↔ (H₂PO₄⁻) pKa = 7.2 (4)

Bei Einsatz eines schwach sauren Ionenaustauschers, bei welchem nur die an die Karbonathärte gebundenen Calcium- bzw. Magnesiumionen des Wassers gegen die Wasserstoffionen des Ionenaustauschers ausgetauscht werden, sinkt der pH-Wert auf einen minimalen Wert von 4,3. Üblicherweise liegen die pH-Werte des Trinkwassers nach dem Ionenaustauscher und nach einer nach den Gl. (3) und (4) erfolgten Reaktion in einem pH-Bereich zwischen 6.0 und 7.0.

Die Orthophosphat-Ionen begünstigen auf metallischen Oberflächen die Ausbildung von schützenden Oxidschichten, welche die weitere Korrosion verhindern. Ebenfalls kann durch Zugabe von Orthophosphat eine Verringerung der Entzinkungsneigung von Kupfer-Zinklegierungen erreicht werden.

Im Unterschied zu herkömmlichen Korrosionsschutzmaßnahmen, die auf dem Einsatz von Alkali- (Natrium, Kalium)-phosphaten beruhen, lassen sich mit den erfindungsgemäßen Maßnahmen geringe Substanzmengen hinreichend genau eindosieren. Hingegen arbeiten die bekannten Dosierschleusen für Alkali-Orthophosphate aufgrund von dessen guter Löslichkeit sehr ungenau und sind deshalb für den Einsatz im Trinkwasser eher nicht geeignet.

Als Härtestabilisator wurde auch schon Polyphosphat vorgeschlagen. Ein Korrosionsschutz lässt sich jedoch mittels Polyphosphat nicht erzielen. Durch Zugabe von Polyphosphaten wird die Korrosionswahrscheinlichkeit sogar erhöht, indem Polyphosphate den gleichmäßigen Flächenabtrag fördern und so zum Beispiel die Kupferlöslichkeit erhöhen.

Um eine gewünschte Wasserqualität einzustellen, ist es vorteilhaft, wenn eine Mischung aus bzw. mit Tricalciumdiphosphat und Trimagnesiumdiphosphat als Korrosionsinhibitor eingesetzt wird, und wenn dabei der Anteil von Trimagnesiumdiphosphat weniger als 20 Massen-% beträgt.

Für eine vereinfachte Handhabung ist es günstig, wenn der Korrosionsinhibitor als Feststoff, insbesondere als Granulat in Kontakt mit dem aufzubereitenden Wasser gebracht wird.

Für eine synergistische Wirkung in Verbindung mit dem Korrosionsinhibitor ist es vorteilhaft, wenn der Ionenaustauscher als mit Wasserstoff zumindest teilweise beladener, schwach saurer oder stark saurer Kationenaustauscher bereitgestellt wird. Denkbar ist es auch, dass sich der Ionenaustauscher im Bereich von 10 bis 90% seiner Kapazität (definiert als Zahl der Ionenaustauschergruppen pro Gewichtseinheit des Säulenfüllmaterials) in der Wasserstoffform und für den Rest ggf. in der Alkaliform befindet.

Sowohl zur Korrosionshemmung als auch zur Qualitätsverbesserung beispielsweise im Hinblick auf die Zubereitung von Heißgetränken ist es vorteilhaft, wenn der ph-Wert des aus dem Ionenaustauscher mit Wasserstoff-Ionen beladenen Wassers durch den Korrosionsinhibitor unter Bildung von Hydrogenphosphat-Ionen bzw. Dihydrogenphosphat-Ionen erhöht und/oder abgepuffert wird.

Um die Bereitstellung und Anwendung weiter zu vereinfachen, sieht eine vorteilhafte Ausführung vor, dass der Ionenaustauscher und der Korrosionsinhibitor in einem Behältnis von dem aufzubereitenden Wasser durchströmt werden.

Um die Löslichkeit des Korrosionsinhibitors zu verbessern, ist es vorteilhaft, wenn zumindest ein Teilstrom des aufzubereitenden Wassers zuerst über den Ionenaustauscher und dann über den Korrosionsinhibitor geleitet wird. Denkbar ist je nach Anwendungsfall auch eine umgekehrte serielle Durchströmung, also zuerst über den Korrosionsinhibitor und dann über den Ionenaustauscher, um die Phosphat-Zudosierung gering zu halten.

Zur Entfernung unerwünschter Substanzen ist es vorteilhaft, wenn das aufzubereitende Wasser mittels eines Aktivkohlefilters filtriert wird.

Im Hinblick auf eine Vorrichtung zur Wasseraufbereitung von Trinkwasser insbesondere für wasserführende Installationen oder Geräte wird die eingangs genannte Aufgabe durch die Kombination eines zur Enthärtung des aufzubereitenden Wassers durch Austausch von Erdalkali-Ionen gegen Wasserstoff-Ionen eingerichteten Ionenaustauschers und eines durch Erdalkali-Orthophosphate in Form von Tricalciumdiphosphat und/oder Trimagnesiumdiphosphat gebildeten Korrosionsinhibitors gelöst.

Vorteilhafterweise enthält der Korrosionsinhibitor Tricalciumdiphosphat, Trimagnesiumdiphosphat oder eine Mischung davon bzw. damit, wobei in einer Mischung der Anteil von Trimagnesiumdiphosphat weniger als 20 Massen-% beträgt.

Für eine vereinfachte Handhabung ist es auch von Vorteil, wenn der Ionenaustauscher und der Korrosionsinhibitor in einem mit einem Wasserzulauf und einem Wasserablauf versehenen Behälter angeordnet sind.

Eine weitere Vereinfachung ergibt sich dadurch, dass der Behälter in Form einer als Verbrauchsmittel in ein wasserführendes Gerät einwechselbaren Kartusche ausgebildet ist, und dass der Korrosionsinhibitor als Feststoffschüttung von dem aufzubereitenden Wasser durchströmbar ist.

Im Folgenden wird die Erfindung anhand der in der Zeichnung in schematischer Weise dargestellten Ausführungsbeispiele näher erläutert. Es zeigen
- Fig. 1: eine Vorrichtung zur Wasserbehandlung umfassend einen Ionenaustauscher und einen Korrosionsinhibitor in einer schaubildlichen Darstellung;
- Fig. 2 - 6: weitere Ausführungsbeispiele mit unterschiedlicher Anordnung von Ionenaustauscher und Korrosionsinhibitor in einer Fig. 1 entsprechenden Darstellung.

Die in der Zeichnung dargestellten Vorrichtungen bestehen im Wesentlichen aus einer Wasseraufbereitungskartusche 1, welche ein Ionenaustauschermaterial 2, eine Granulatschüttung 3 aus Tricalciumdiphosphat Ca₃(PO₄)₂ und/oder Trimagnesiumdiphosphat Mg₃(PO₄)₂ und ein Aktivkohlefilter 11 enthält. Zweckmäßig haben die Granulate in der Granulatschüttung 3 einen Korndurchmesser von 0,2 bis 5 mm.

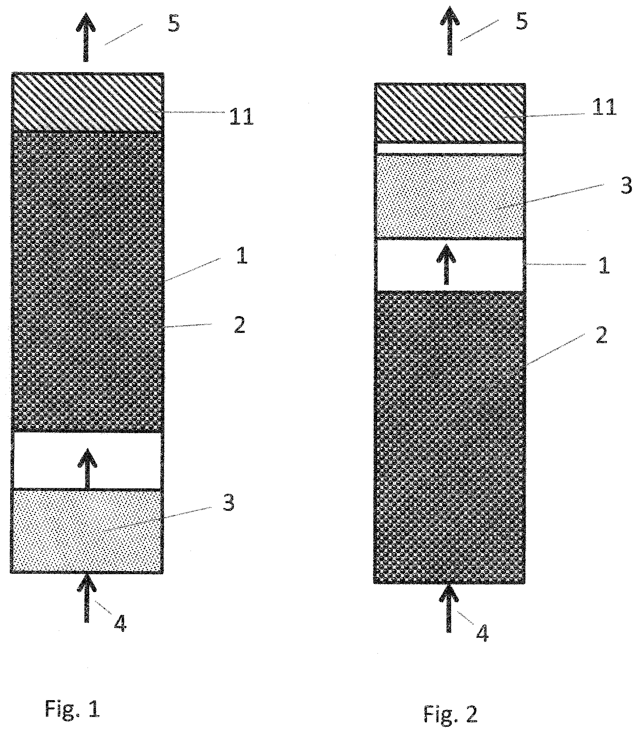

In der Anordnung nach Fig. 1 wird das aufzubereitende Trinkwasser über einen Zulauf 4 in die Wasseraufbereitungskartusche 1 geleitet und durchströmt zunächst die Granulatschüttung 3 und anschließend den Ionenaustauscher 2, welcher sich überwiegend in der Wasserstoffform befindet. Sodann strömt das Wasser über das Aktivkohlefilter 11. Das aufbereitete Wasser kann über den Ablauf 5 aus der Wasseraufbereitungskartusche 1 entnommen werden.

Bei der Durchströmung der Granulatschüttung 3 löst sich eine kleine Menge der tertiären ortho-Phosphate. Insbesondere bei Verwendung einer Mischung aus Tricalciumdiphosphat und Trimagnesiumdiphosphat, wobei der Anteil an Trimagnesiumdiphosphat bei weniger als 20 Massen% und vorzugsweise bei ca. 15 Massen% liegt, werden optimale Konzentrationen im Trinkwasser erreicht. In diesem Fall liegt die Phosphatkonzentration unterhalb der von der Trinkwasserverordnung geforderten Höchstwerte bei ca. 2 ppm.

In dem Ionenaustauscher werden die Härtebildner des Trinkwassers durch die Wasserstoffionen des Ionenaustauschermaterials ersetzt. Die in dem Wasser gelösten Phosphationen reagieren mit den Wasserstoffionen. Dabei bilden sich Hydrogenphosphat-Ionen bzw. Dihydrogenphosphat-Ionen gemäß vorstehender Gleichung (3) und (4). Der pH-Wert wird abgepuffert und gleichzeitig entstehen Korrosionshemmstoffe.

In einer weiteren Ausführung gemäß Fig. 2 wird das Trinkwasser zunächst über einen überwiegend in der Wasserstoffform befindlichen Ionenaustauscher 2 geleitet, wobei die Härtebildner des Trinkwassers durch die Wasserstoffionen des Austauschers ersetzt werden und sich der pH-Wert des Trinkwassers erniedrigt. Anschließend wird der Gesamtstrom des sauren Trinkwassers über eine Schüttung bestehend aus einem Granulat aus Tricalciumdiphosphat und/oder Trimagnesiumdiphosphat geleitet. Aufgrund des geringeren pH-Wertes erhöht sich die Löslichkeit des Orthophosphats, und der gelöste Anteil ist dementsprechend hoch (> 100 ppm).

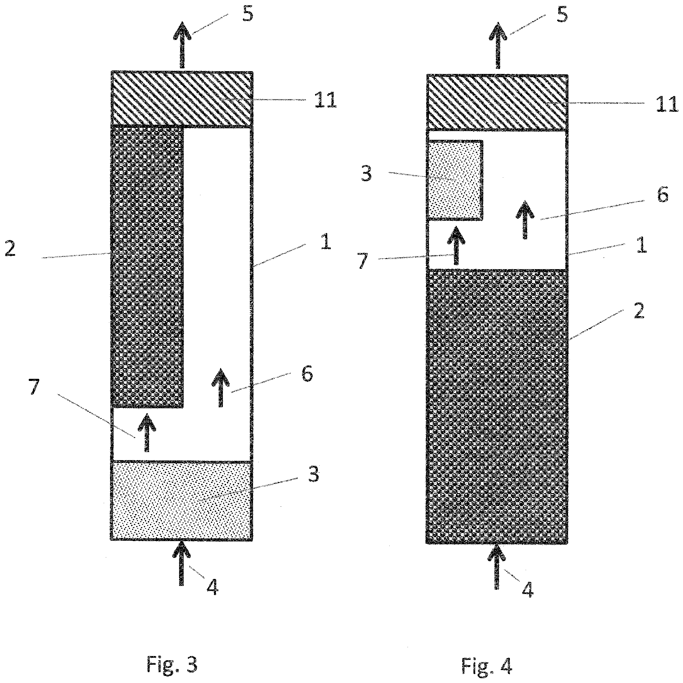

Die weiteren Fig. 3 bis 6 zeigen verschiedene Ausführungsbeispiele für die Aufteilung von Teilströmen in der Kartusche 1. Dabei kann je nach Mengenverhältnis zwischen Ionenaustauscherstrom und Granualtstrom die Menge an gelöstem Phosphat eingestellt werden.

Gemäß Fig. 3 durchströmt das gesamte aufzubereitende Trinkwasser zunächst die Granulatschüttung 3. Ein Teilstrom 7 wird über den Ionenaustauscher 2 geleitet, während der andere Teilstrom 6 direkt zur Aktivkohleschüttung 11 strömt. Die Teilströme 6 und 7 werden zusammen über das Aktivkohlefilter 11 geleitet.

Nach Fig. 4 durchströmt das gesamte aufzubereitende Trinkwasser zunächst den Ionenaustauscher 2. Anschließend wird ein Teilstrom 7 über die Granulatschüttung 3 geleitet, während der andere Teilstrom 6 direkt zur Aktivkohleschüttung 11 gelangt. Beide Teilströme 6 und 7 werden über das Aktivkohlefilter 11 ausgeleitet.

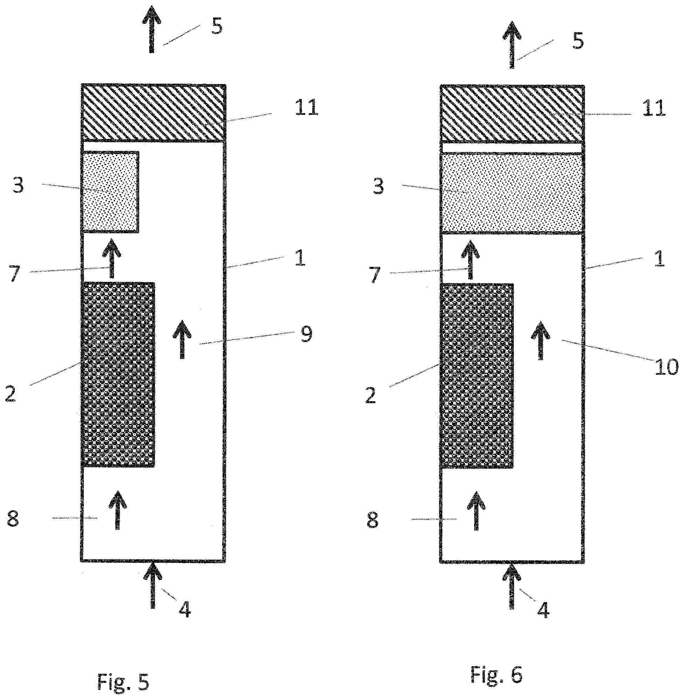

Fig. 5 zeigt eine Variante, bei der ein Teilstrom 8 über den Ionenaustauscher 2 geleitet wird. Anschließend wird das über den Ionenaustauscher aufbereitete Wasser 7 direkt in die Granulatschüttung 3 geleitet wird. Vor dem Aktivkohlefilter 11 erfolgt ein Verschnitt mit dem unbehandelten Teilstrom 9.

In der Alternative nach Fig. 6 wird ein Teilstrom 8 über den Ionenaustauscher 2 geleitet, während ein weiterer Teilstrom 10 parallel daran vorbeigeführt wird. Die beiden Teilströme 7 und 10 werden zusammen über die Granulatschüttung 3 geleitet. Der Gesamtstrom wird über eine Aktivkohleschüttung 11 zum Ablauf 5 geleitet und verlässt die Wasseraufbereitungskartusche 1.

## Patentansprüche

1. Verfahren zur Aufbereitung von Trinkwasser insbesondere für wasserführende Installationen oder Geräte bei dem aufzubereitendes Wasser mittels eines Ionenaustauschers (2) durch Austausch von Erdalkali-Ionen gegen Wasserstoff-Ionen enthärtet wird, **dadurch gekennzeichnet, dass** das aufzubereitende Wasser mit einem durch Tricalciumdiphosphat und/oder Trimagnesiumdiphosphat gebildeten Korrosionsinhibitor (3) behandelt wird, wobei der ph-Wert des aus dem Ionenaustauscher (2) mit Wasserstoff-Ionen beladenen Wassers durch den Korrosionsinhibitor (3) unter Bildung von Hydrogenphosphat-Ionen bzw. diHydrogenphosphat-Ionen erhöht und/oder abgepuffert wird.

2. Verfahren nach Anspruch 1, **dadurch gekennzeichnet, dass** eine Mischung aus Tricalciumdiphosphat und Trimagnesiumdiphosphat als Korrosionsinhibitor (3) eingesetzt wird, wobei der Anteil von Trimagnesiumphosphat weniger als 20 Massen-% beträgt.

3. Verfahren nach Anspruch 1 oder 2, **dadurch gekennzeichnet, dass** der Korrosionsinhibitor (3) als Feststoff, insbesondere als Granulat in Kontakt mit dem aufzubereitenden Wasser gebracht wird.

4. Verfahren nach einem der Ansprüche 1 bis 3, **dadurch gekennzeichnet, dass** der Ionenaustauscher (2) als mit Wasserstoff zumindest teilweise beladener, schwach saurer oder stark saurer Kationenaustauscher bereitgestellt wird.

5. Verfahren nach einem der Ansprüche 1 bis 4, **dadurch gekennzeichnet, dass** das aufzubereitende Wasser in einem Behälter (1) über den Ionenaustauscher (2) und den Korrosionsinhibitor (3) geleitet wird.

6. Verfahren nach einem der Ansprüche 1 bis 5, **dadurch gekennzeichnet, dass** zumindest ein Teilstrom des aufzubereitenden Wassers zuerst über den Ionenaustauscher (2) und dann über den Korrosionsinhibitor (3) geführt wird, oder umgekehrt.

7. Verfahren nach einem der Ansprüche 1 bis 6, **dadurch gekennzeichnet, dass** das aufzubereitende Wasser mittels eines Aktivkohlefilters (11) filtriert wird.

8. Vorrichtung zur Wasseraufbereitung von Trinkwasser insbesondere für wasserführende Installationen oder Geräte umfassend einen zur Enthärtung des aufzubereitenden Wassers durch Austausch von Erdalkali-Ionen gegen Wasserstoff-Ionen eingerichteten Ionenaustauscher (2) und einen durch Tricalciumdiphosphat, Trimagnesiumdiphosphat oder eine Mischung davon gebildeten Korrosionsinhibitor (3) zum Einbringen von Orthophosphat-Ionen in das aufzubereitende Wasser, wobei der Ionenaustauscher (2) und der Korrosionsinhibitor (3) in einem mit einem Wasserzulauf (4) und einem Wasserablauf (5) versehenen Behälter (1) angeordnet sind und der ph-Wert des aus dem Ionenaustauscher (2) mit Wasserstoff-Ionen beladenen Wassers durch den Korrosionsinhibitor (3) unter Bildung von Hydrogenphosphat-Ionen bzw. diHydrogenphosphat-Ionen erhöht und/oder abgepuffert wird.

9. Vorrichtung nach Anspruch 8, **dadurch gekennzeichnet, dass** in der Mischung aus Tricalciumdiphosphat und Trimagnesiumdiphosphat der Anteil von Trimagnesiumphosphat weniger als 20 Massen-% beträgt.

10. Vorrichtung nach Anspruch 8 oder 9, **dadurch gekennzeichnet, dass** der Behälter (1) in Form einer als Verbrauchsmittel in ein wasserführendes Gerät einwechselbaren Kartusche ausgebildet ist.

11. Vorrichtung nach einem der Ansprüche 8 bis 10, **dadurch gekennzeichnet, dass** der Korrosionsinhibitor (3) als Feststoffschüttung von dem aufzubereitenden Wasser durchströmbar ist.

## Claims

1. Method for processing drinking water, in particular for water-carrying installations or apparatuses, in which method water to be processed is softened by means of an ion exchanger (2) by exchanging alkaline earth ions for hydrogen ions, **characterized in that** the water to be processed is treated with a corrosion inhibitor (3) formed by tricalcium diphosphate and/or trimagnesium diphosphate, the pH value of the water charged with hydrogen ions from the ion exchanger (2) being increased and/or buffered by the corrosion inhibitor (3) to form hydrogen phosphate ions or dihydrogen phosphate ions.

2. Method according to claim 1, **characterized in that** a mixture consisting of tricalcium diphosphate and trimagnesium diphosphate is used as the corrosion inhibitor (3), the proportion of trimagnesium phosphate being less than 20% by mass.

3. Method according to either claim 1 or claim 2, **characterized in that** the corrosion inhibitor (3) is brought into contact, as a solid material, in particular as granular material, with the water to be processed.

4. Method according to any of claims 1 to 3, **characterized in that** the ion exchanger (2) is provided as a weakly acidic or strongly acidic cation exchanger that is at least partially charged with hydrogen.

5. Method according to any of claims 1 to 4, **characterized in that** the water to be processed is conveyed in a container (1) via the ion exchanger (2) and the corrosion inhibitor (3).

6. Method according to any of claims 1 to 5, **characterized in that** at least a partial stream of the water to be processed is first guided via the ion exchanger (2) and then via the corrosion inhibitor (3), or vice versa.

7. Method according to any of claims 1 to 6, **characterized in that** the water to be processed is filtered by means of an activated carbon filter (11).

8. Device for processing drinking water, in particular for water-carrying installations or apparatuses, comprising an ion exchanger (2) designed to soften the water to be processed by exchanging alkaline earth metal ions for hydrogen ions, and a corrosion inhibitor (3) formed by tricalcium diphosphate, trimagnesium diphosphate or a mixture thereof for introducing orthophosphate ions into the water to be processed, wherein the ion exchanger (2) and the corrosion inhibitor (3) are arranged in a container (1) that is provided with a water inlet (4) and a water outlet (5) and the pH value of the water charged with hydrogen ions from the ion exchanger (2) is increased and/or buffered by the corrosion inhibitor (3) to form hydrogen phosphate ions or dihydrogen phosphate ions.

9. Device according to claim 8, **characterized in that** the proportion of trimagnesium phosphate in the mixture consisting of tricalcium diphosphate and trimagnesium diphosphate is less than 20% by mass.

10. Device according to either claim 8 or claim 9, **characterized in that** the container (1) is in the form of a cartridge which can be replaced as a consumable in a water-carrying apparatus.

11. Device according to any of claims 8 to 10, **characterized in that** the water to be processed can flow through the corrosion inhibitor (3) which is formed as a solid material filling.

## Revendications

1. Procédé de traitement d'eau potable, notamment pour des installations ou appareils aquifères, dans lequel l'eau à traiter est adoucie au moyen d'un échangeur d'ions (2) par échange d'ions alcalino-terreux contre des ions hydrogène, **caractérisé en ce que** l'eau à traiter est traitée avec un inhibiteur de corrosion (3) formé par du diphosphate de tricalcium et/ou du diphosphate de trimagnésium, la valeur pH de l'eau chargée en ions hydrogène provenant de l'échangeur d'ions (2) étant augmentée et/ou tamponnée par l'inhibiteur de corrosion (3) moyennant la formation d'ions hydrogénophosphate ou d'ions dihydrogénophosphate.

2. Procédé selon la revendication 1, **caractérisé en ce qu'**un mélange de diphosphate de tricalcium et de diphosphate de trimagnésium est utilisé comme inhibiteur de corrosion (3), la proportion de phosphate de trimagnésium étant inférieure à 20 % en masse.

3. Procédé selon la revendication 1 ou 2, **caractérisé en ce que** l'inhibiteur de corrosion (3) est mis en contact avec l'eau à traiter, sous forme solide, en particulier sous forme de granulés.

4. Procédé selon l'une des revendications 1 à 3, **caractérisé en ce que** l'échangeur d'ions (2) est réalisé sous la forme d'un échangeur de cations au moins partiellement chargé d'hydrogène, faiblement acide ou fortement acide.

5. Procédé selon l'une des revendications 1 à 4, **caractérisé en ce que** l'eau à traiter passe dans un récipient (1), par l'échangeur d'ions (2) et par l'inhibiteur de corrosion (3).

6. Procédé selon l'une des revendications 1 à 5, **caractérisé en ce qu'**au moins un flux partiel de l'eau à traiter passe d'abord par l'échangeur d'ions (2) et ensuite par l'inhibiteur de corrosion (3), ou vice versa.

7. Procédé selon l'une des revendications 1 à 6, **caractérisé en ce que** l'eau à traiter est filtrée au moyen d'un filtre à charbon actif (11).

8. Dispositif de traitement d'eau potable, notamment pour des installations ou appareils aquifères, comprenant un échangeur d'ions (2) prévu pour adoucir l'eau à traiter par échange d'ions alcalino-terreux contre des ions hydrogène, et un inhibiteur de corrosion (3) formé par du diphosphate de tricalcium, du diphosphate de trimagnésium ou l'un de leurs mélanges pour introduire les ions orthophosphate dans l'eau à traiter, l'échangeur d'ions (2) et l'inhibiteur de corrosion (3) étant disposés dans un récipient (1) présentant une arrivée d'eau (4) et une évacuation d'eau (5), et la valeur pH de l'eau chargée en ions hydrogène provenant de l'échangeur d'ions (2) étant augmentée et/ou tamponnée par l'inhibiteur de corrosion (3) moyennant la formation d'ions hydrogénophosphate ou d'ions dihydrogénophosphate.

9. Dispositif selon la revendication 8, **caractérisé en ce que** la proportion de phosphate de trimagnésium dans le mélange de diphosphate de tricalcium et de diphosphate de trimagnésium est inférieure à 20 % en masse.

10. Dispositif selon la revendication 8 ou 9, **caractérisé en ce que** le récipient (1) se présente sous la forme d'une cartouche interchangeable comme consommable dans un appareil aquifère.

11. Dispositif selon l'une des revendications 8 à 10, **caractérisé en ce que** l'eau à traiter peut s'écouler à travers l'inhibiteur de corrosion (3) en tant que lit solide.
